# EUROPÄISCHE PATENTSCHRIFT

(11) **EP 1 339 795 B1**
(45) Veröffentlichungstag und Bekanntmachung des Hinweises auf die Patenterteilung: **20.02.2008**
(21) Anmeldenummer: 01988747.0
(22) Anmeldetag: 19.10.2001
(51) Int. Cl.: C08L 67/02, C08K 5/529, C08K 5/526, C08K 5/527

(54) **MIT PHOSPHORIGSÄUREESTERN STABILISIERTE POLYALKYLENTEREPHTHALAT-ZUSAMMENSETZUNGEN**
POLYALKYLENTEREPHTHALATE COMPOSITIONS STABILISED WITH PHOSPHITE ESTERS
COMPOSITIONS A BASE DE TEREPHTALATE DE POLYALKYLENE STABILISEES AVEC DES ESTERS D'ACIDE PHOSPHOREUX

(30) Priorität: 25.10.2000 DE 10052805
(43) Veröffentlichungstag der Anmeldung: 03.09.2003
(73) Patentinhaber: LANXESS Deutschland GmbH, 51369 Leverkusen (DE)
(72) Erfinder: BIENMÜLLER, Matthias, 47803 Krefeld (DE); IDEL, Karsten-Josef, 47802 Krefeld (DE); PAUL, Friedemann, 51469 Bergisch Gladbach (DE)
(86) Internationale Anmeldenummer: PCT/EP2001/012103
(87) Internationale Veröffentlichungsnummer: WO 2002/034833

(56) Entgegenhaltungen:
- EP-A- 0 280 179
- EP-A- 0 373 465
- DE-A- 2 615 341
- DE-A- 4 244 028
- US-A- 5 726 227

## Beschreibung

Die Erfindung betrifft Zusammensetzungen auf Basis von Polyalkylenterephthalat, die geringe Mengen Phosphorigsäureester enthalten.

Zu Polycarbonat- und Polyesterformmassen werden Phosphorigsäureester zur Stabilisierung bei thermischer Belastung, insbesondere zur Verhinderung von Verfärbungseigenschaften bei der Herstellung der Formmassen durch Compoundierung und Verarbeitung der Formmassen zu thermoplastischen Formkörpern zugesetzt (z.B. DE-A 2 140 207, DE-A 2 255 639, DE-A 2 615 341).

Phosphorigsäureester werden insbesondere Polyalkylenterephthalaten, die thermischen und/oder oxidativen Belastungen oder starker UV-Bestrahlung ausgesetzt sind, zur Stabilisierung zugesetzt. Die Stabilisierung reduziert den Polymerabbau bei Temperung an heißer Luft, wodurch für die praktische Anwendung wesentliche Eigenschaften wie z.B. Zähigkeit und Dehnungsfähigkeit, auf ein weniger niedriges Niveau abfallen als bei unstabilisierte Formmassen (DE-A 2 615 341).

Phosphorigsäureester werden ebenfalls Polymerblends aus Polyalkylenterephthalat und Polycarbonat, die eine gute Zähigkeit sowie Wärmeformbeständigkeit aufweisen, zugesetzt, um eine bessere Lackierbarkeit und Lackhaftung zu ermöglichen (EP-A 0 373 465).

Aus DE 42 44 028A sind Zusammensetzungen bekannt, die a) Polyalkylenterephthalat, b) 0,01 bis 0,4 Gew.-Teile einer Phosphitverbindung und c) 0,01 bis 0,4 Gew.-Teile einer weiteren Phosphitverbindung enthalten. EP-A 0 280 179 beschreibt Zusammensetzungen enthaltend a) Polybutylenterephthalat und 0,01 bis 3 Gew.-Teile einer Phosphitverbindung.

Neben der Stabilisierung von Polymerblends bei thermischer Belastung ist eine Stabilisierung gegen Hydrolyse wünschenswert. Eine typische Anwendung für Formmassen auf Basis von Polybutylenterephthalat, bei der eine hervoragende Hydrolysebeständigkeit gefordert wird, sind extrudierte Lichtwellenleiterummantelungen. Um die Glasfasern auch nach mehreren Jahren Anwendung in feuchter Umgebung sicher vor mechnischen Beschädigungen schützen zu können, ist eine verbesserte Hydrolysebeständigkeit erforderlich.

Es wurde nun gefunden, dass bei Zusammensetzungen auf Basis von Polyalkylenterephthalaten, die geringe Mengen an Phosphorigsäureestern enthalten, eine deutliche Verbesserung der Hydrolysestabilität zu beobachten ist.

Gegenstand der Erfindung sind daher Zusammensetzungen enthaltend
A) Polyester, ausgewählt aus der Gruppe der Polyalkylenterephthalate, insbesondere bevorzugt Polybutylenterephthalat,
B) 0,041 bis 0,095 Gew.-Teile, vorzugsweise 0,051 bis 0,075 Gew.-Teile, besonders bevorzugt 0,055 Gew.-Teile bis 0,065 Gew.-Teile (bezogen auf die Gesamtzusammensetzung) Phosphorigsäureester der Formel (I) 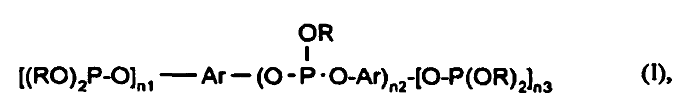 in welcher
   - n₁: 1 oder eine beliebige ganze Zahl >1, vorzugsweise 1 bis 9,
   - n₂: 0 oder eine beliebige ganze Zahl >0, vorzugsweise 0 bis 2,
   - n₃: 1 oder eine beliebige ganze Zahl >1, vorzugsweise 1 bis 9 bedeutet,
   - R: Alkyl, Aralkyl, Cycloalkyl, Aryl oder Hetaryl bedeutet, wobei mindestens einer der Reste R den Rest eines mindestens eine Oxetangruppe Y enthaltenden Monoalkohols darstellt, und
   - Ar: für Aryl steht, welches gegebenenfalls durch Alkyl und/oder Hydroxy substituiert sein kann, und wobei für n₂ ≠ 0 Ar gleich oder verschieden sein kann, und
   gegebenenfalls mindestens eine weitere Komponente ausgewählt aus
C) Füll- und Verstärkungsstoffen,
D) Flammschutzadditiven,
E) aromatisches Polycarbonat
F) Elastomermodifikatoren, und
G) weiteren üblichen Additiven.

Der Gehalt an Polyalkylenterephthalat gemäß Komponente A beträgt im allgemeinen 31 bis 99,959 Gew.-Teile, bevorzugt 61 bis 99,959 Gew.-Teile, besonders bevorzugt 91 bis 99,959 Gew.-Teile, insbesondere bevorzugt 99,6 bis 99,959 Gew.-Teile bezogen auf 100 Gew.-Teile der Zusammensetzung.

Der Gehalt an Estern der phosphorigen Säure gemäß Komponente B beträgt im allgemeinen 0,041 bis 0,095 Gew.-Teile, bevorzugt 0,051 bis 0,075 Gew.-Teile, besonders bevorzugt 0,055 bis 0,065 Gew.-Teile bezogen auf 100 Gew.-Teile der Gesamtzusammensetzung.

Der Gehalt an Füll und Verstärkungsstoffen gemäß Komponente C beträgt im allgemeinen 6 bis 69 Gew.-Teile, bevorzugt 11 bis 31 Gew.-Teile, besonders bevorzugt 16 bis 25 Gew.-Teile bezogen auf 100 Gew.-Teile der Gesamtzusammensetzung.

Der Gehalt an Flammschutzadditiven gemäß Komponente D beträgt im allgemeinen 5 bis 25 Gew.-Teile, bevorzugt 9 bis 19 Gew.-Teile bezogen auf 100 Gew.-Teile der Gesamtzusammensetzung.

Der Gehalt an aromatischem Polycarbonat gemäß Komponente E beträgt im allgemeinen 6 bis 69 Gew.-Teile, bevorzugt 21 bis 56 Gew.-Teile, besonders bevorzugt 31 bis 50 Gew.-Teile bezogen auf 100 Gew.-Teile der Gesamtzusammensetzung.

Der Gehalt an Elastomermodifikatoren gemäß Komponente F beträgt im allgemeinen 5 bis 29 Gew.-Teile, bevorzugt 7 bis 19 Gew.-Teile, besonders bevorzugt 9 bis 15 Gew.-Teile bezogen auf 100 Gew.-Teile der Gesamtzusammensetzung.

Der Gehalt an üblichen Additiven gemäß Komponente G beträgt im allgemeinen 0,01 bis 5 Gew.-Teile, bevorzugt 0,05 bis 3 Gew.-Teile, besonders bevorzugt 0,1 bis 0,9 Gew.-Teile bezogen auf 100 Gew.-Teile der Gesamtzusammensetzung.

Besonders bevorzugt sind Zusammensetzungen enthaltend die Komponenten A) und B) sowie gegebenenfalls übliche Additive, beispielsweise und bevorzugt Nukleierungsmittel.

### Komponente A

Die Polyalkylenterephthalate der Komponente A sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Mol-%, bezogen auf die Diolkomponente Ethylenglykol- und/oder Propandiol-1,3 und/oder Butandiol-1,4-Reste.

Die bevorzugten Polyalkylenterephthalate können neben Terephthalsäureresten bis zu 20 Mol-%, vorzugsweise bis zu 10 Mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexan-diessigsäure.

Die bevorzugten Polyalkylenterephthalate können neben Ethylenglykol- bzw. Butandiol-1,4-Resten bis zu 20 Mol-%, vorzugsweise bis zu 10 Mol-%, andere aliphatische Diole mit 3 bis 12 C-Atomen oder cycloalipahtische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(B-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-A 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Bevorzugte Polyalkylenterephthalate sind Polybutylenterephthalat, Polytrimethylenterephthalat und/oder Polyethylenterephthalat. Besonders bevorzugt ist Polybutylenterephthalat.

Die Polyalkylenterephthalate sind gekennzeichnet durch eine intrinsische Viskosität IV von 0,55 bis 1,95 cm³/g, bevorzugt 0,85 bis 1,85 cm³/g, besonders bevorzugt 1,15 bis 1,65 cm³/g, ganz besonders bevorzugt 1,35 bis 1,55 cm³/g, insbesondere bevorzugt 1,41 bis 1,42 cm³/g_{.}

### Komponente B

Phosphorigsäureester im Sinne der Erfindung sind Phosphorigsäureester der Formel (I) 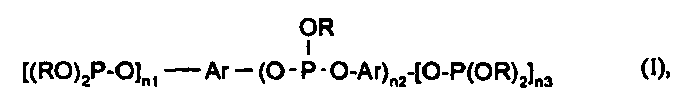 in welcher
- n₁: 1 oder eine beliebige ganze Zahl >1, vorzugsweise 1 bis 9,
- n₂: 0 oder eine beliebige ganze Zahl >0, vorzugsweise 0 bis 2,
- n₃: 1 oder eine beliebige ganze Zahl >1, vorzugsweise 1 bis 9 bedeutet,
- R: Alkyl, Aralkyl, Cycloalkyl, Aryl oder Hetaryl bedeutet, wobei mindestens einer der Reste R den Rest eines mindestens eine Oxetangruppe Y enthaltenden Monoalkohols darstellt, und
- Ar: für Aryl steht, welches gegebenenfalls durch Alkyl und/oder Hydroxy substituiert sein kann, und wobei für n₂ ≠ 0 Ar gleich oder verschieden sein kann,
und Verbindungen ausgewählt aus
Tris-[(3-ethyloxetanyl-3-methyl]-phosphit,
Tris-[(3-pentyloxctanyl-3-methyl]-phosphit,
Phenyl-bis-[(3-ethyloxetanyl-3)-methyl]-phosphit,
2-Phenoxy-spiro(1,3,2-dioxaphosphorinan-5,3'-oxetan),
3,3-Bis-[spiro(oxetan-3',5"-(1",3",2"-dioxaphosphorinan-2"))-oxy-methyl]-oxetan.

Als Reste R in Formel (I) sind beispielsweise geeignet: C₁-C₁₈-Alkyl, ein- bzw. mehrkerniges C₃-C₁₀-Cycloalkyl, Phenyl-C₁-C₂-alkyl, ein- bzw. mehrkerniges C₆- C₁₈-Aryl, wie Phenyl, Naphthyl, Anthracyl, Phenanthryl, Biphenyl, Phenoxyphenyl oder Fluorenyl sowie Heterozyklen wie beispielsweise Tetrahydrofuryl, wobei die Arylreste beispielsweise durch Alkyl und/oder Halogen, wie C₁-C₁₈-Alkyl, Chlor und/oder Brom substituiert sein können.

Der Rest R kann auch ein Derivat eines oder mehrerer Oxetangruppen P enthaltender C₁-C₆-Monoalkohol sein.

Als Oxetangruppe Y sei der heterocyclische Rest 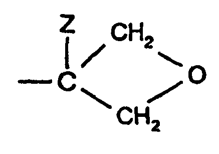 verstanden, worin Z beispielsweise H, CH₃, C₂H₅, n-C₅H₁₁, -CH₂-C₅H₁₁, -CH₂-O-C₆H₁₃ oder CH₂-O-C₂H₅ sein kann.

Der Rest R in Formel (I) kann oben auch selbst die Oxetangruppe Y, beispielsweise mit Z = H bedeuten.

Der Rest Ar leitet sich von Phenolen mit 2 phenolischen Hydroxylgruppen ab. Vorzugsweise leitet sich der Rest Ar von den folgenden Verbindungen ab: Hydrochinon, Resorcin, Brenzcatechin, Di-t-butylbrenzcatechin, 4,4'-Dihydroxydiphenyl, Bis-(hydroxy-phenyl)-alkane wie beispielsweise C₁-C₈-Akylen- bzw. C₂-C₈-Alkylidenbisphenole, Bis-(hydroxyphenyl)-cycloalkane wie beispielsweise C₅-C₁₅-Cycloalkylen- bzw. C₅-C₁₅-Cycloalkylenbisphenole, α,α'-Bis-(hydroxyphenyl)-diisopropylbenzol sowie die entsprechenden kernalkylierten bzw. kernhalogenierten Verbindungen, beispielsweise Bis-(4-hydroxy-phenyl)-propan-2,2 (Bisphenol A), Bis-(4-hydroxy-3,5-dichlorphenyl)-propan-2,2 (Tetrachlorbisphenyl A), Bis-(4-hydroxy-3,5-dibromohenyl)-propan-2,2 (Tetrabrombisphenol A), Bis-(4-hydroxy-3,5-dimethyl-phenyl)-propan-2,2 (Tetramethylbisphenol A), Bis-(4-hydroxy-3-methylphenyl-propan-2,2-cyclohexan-1,1 (Bisphenol Z) sowie α,α'-Bis-(4-hydroxy-phenyl)-p-düsopropyl-benzol, Dihydroxynaphthaline und Dihydroxyanthracene.

Als Phenole mit mehr als zwei phenolischen Hydroxylgruppen eignen sich beispielsweise Phloroglucin, Pyrogallol.

Unter den beanspruchten Verbindungen werden die sich von 2,2-Bis-(hydroxyphenyl)-alkanen und oxetangruppenhaltigen Monoalkoholen ableitenden Verbindungen der Formel (I) bevorzugt, also Verbindungen der Formel (I), worin Ar einem Rest der Formel (II) entspricht 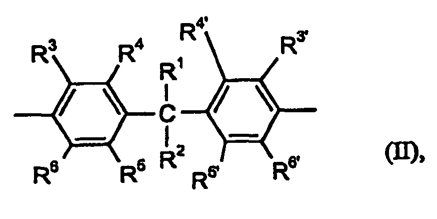 worin
- R¹ und R²: gleich oder verschieden sind und H, C₁-C₁₈-Alkyl, ein- oder mehrkerniges C₃-C₆-Cycloalkyl oder ein- oder mehrkerniges C₆-C₁₈-Aryl bedeuten,
- R³, R^{3'}, R⁴, R^{4'}, R⁵, R^{5'}, R⁶ und R^{6'}: gleich oder verschieden sind und H, C₁-C₁₈-Alkyl, ein- oder mehrkerniges C₃-C₆-Cycloalkyl, ein- oder mehrkerniges C₆-C₁₈-Aryl, C₁-C₁₈-Alkoxy, C₁-C₁₈-Aryloxy oder Halogen bedeuten.

Die als Substitutent für Verbindungen der Formel (II) geeigneten Alkylsubstituenten können unverzweigt oder verzweigt, gesättigt oder ungesättigt sein, geeignete Arylsubstituenten können beispielsweise Phenyl oder Biphenyl sein, als Halogensubstituenten kommen bevorzugt Cl oder Br vor.

Die Verbindungen der Formel (I), in denen Ar einem Rest der Formel (II) entspricht, werden durch Umsetzung der entsprechenden Bisphenole der Formel (III) 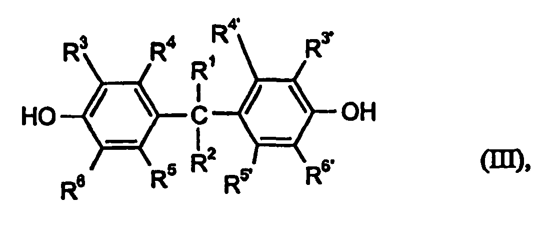 worin
R¹ bis R⁶ sowie R^{3'} bis R^{6'}, die die obengenannte Bedeutung haben, in der in DE-OS 2 255 639 beschriebenen Weise erhalten.

Die Verbindungen der beanspruchten Art stellen hochsiedende Flüssigkeiten, Harze oder Feststoffe dar. Sie sind in organischen Lösungsmitteln gut löslich, insbesondere in den bei der Herstellung von Polycarbonaten verwendeten Lösungsmitteln und eignen sich deshalb besonders zur Verwendung als Stabilisatoren in Polycarbonaten hoher Viskosität, welche bei hohen Temperaturen hergestellt bzw. verarbeitet werden.

Die Verbindungen, von denen nachstehend einige Beispiele aufgeführt sind, können einzeln als auch in Mischung hergestellt und angewendet werden. Die Phosphite können einen linearen oder verzweigten Aufbau besitzen.

Eine beispielhafte Auswahl gibt die folgende Übersicht:

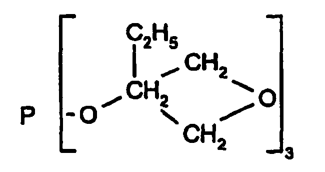

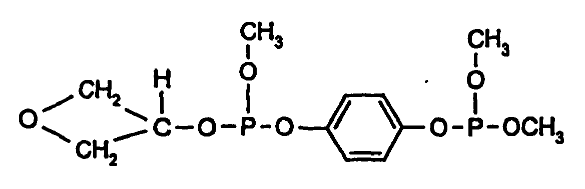

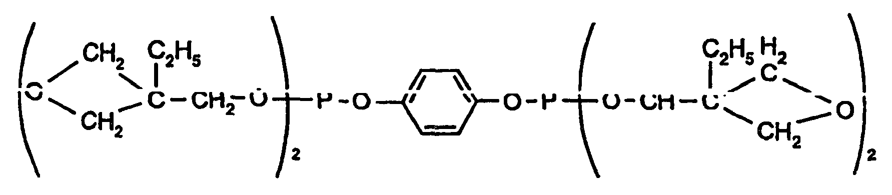

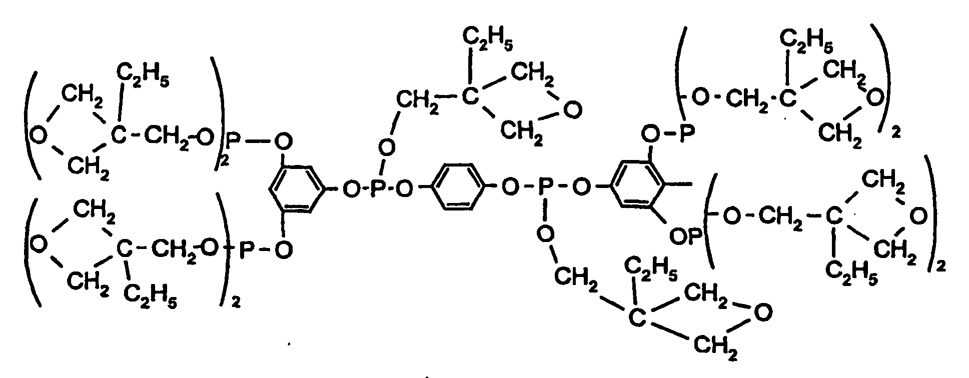

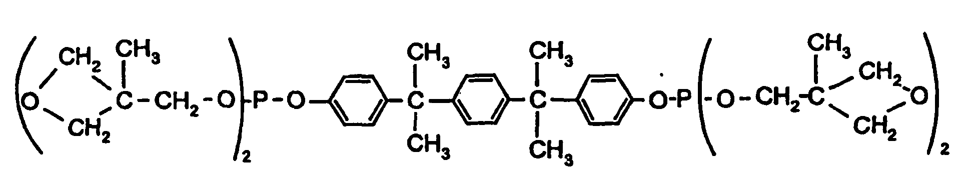

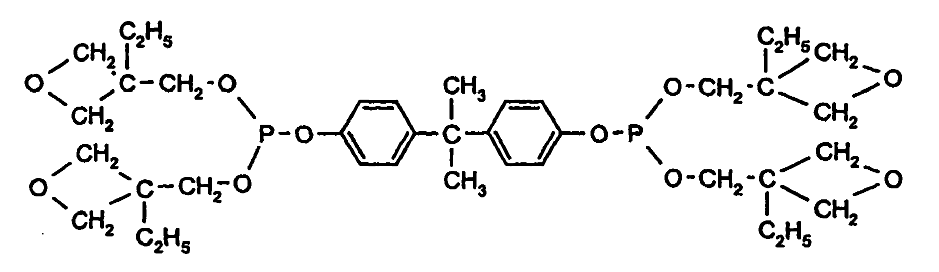

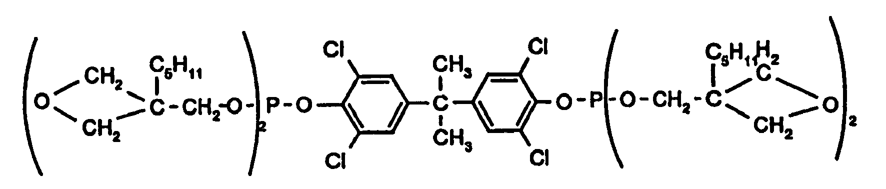

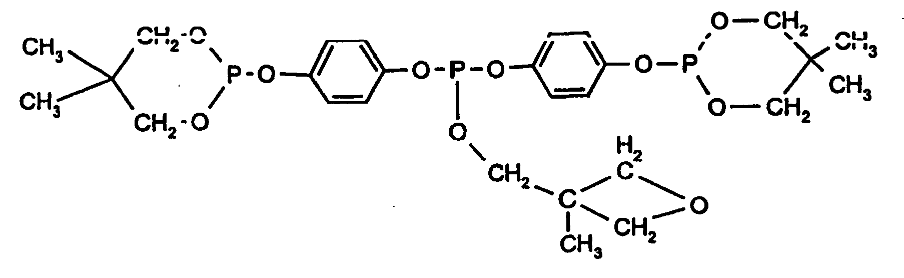

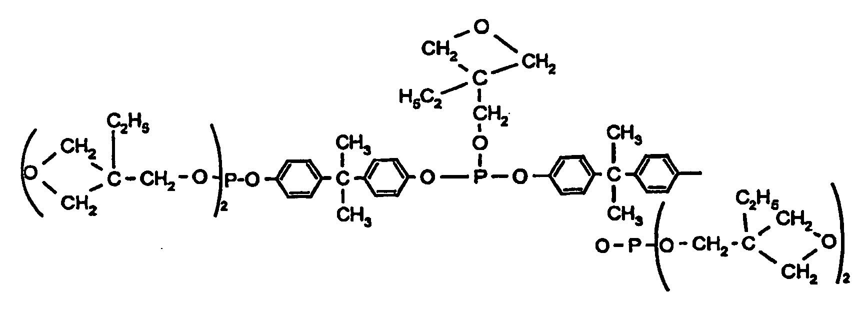

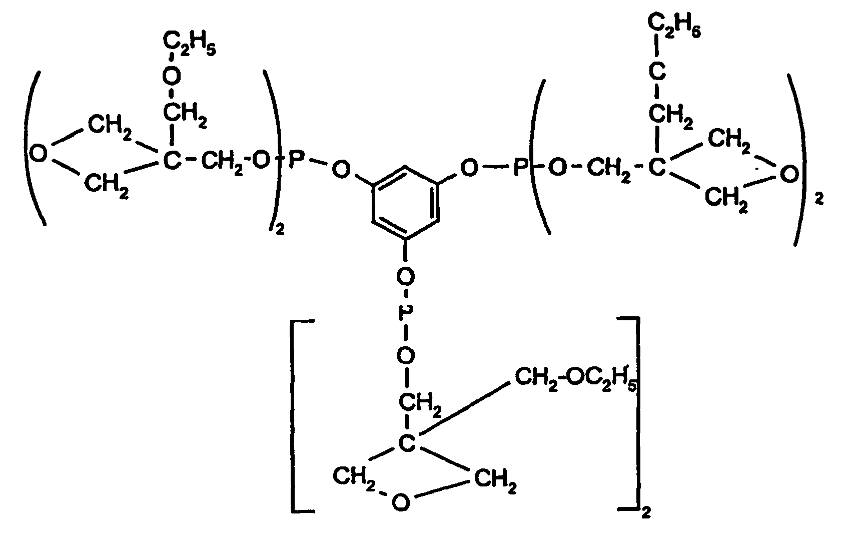

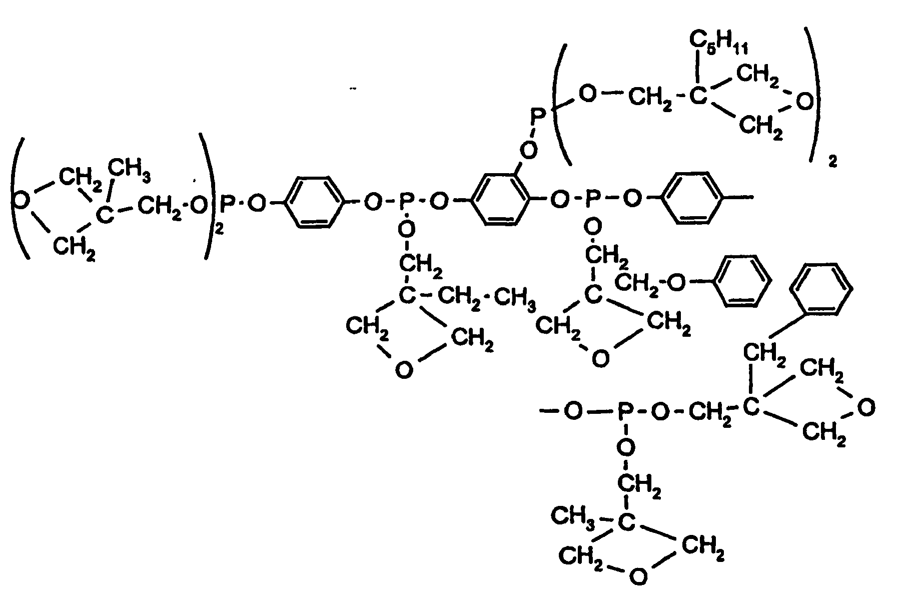

Die Phosphorigsäureester der Formel (I) sind bekannt und lassen sich nach den in der DE-A 22 55 639 (= US-A 4 073 769 und 4 323 501) beschriebenen Verfahren herstellen. Die weiterhin genannten neutralen Ester der phosphorigen Säure sind ebenfalls bekannt (DE-A 2 140 207, entspricht US-A 3 794 629).

Die Herstellung der erfindungsgemäßen Phosphite der Formel (I), in denen R der Rest eines oxetangruppenhaltigen Monoalkohols ist, kann beispielsweise erfolgen, indem ein Gemisch, bestehend aus einem oxetangruppenhaltigen Monoalkohol R-OH und einer zwei oder mehrere phenolischen Hydroxylgruppen enthaltenden Arylverbindung, beispielsweise einem Bisphenol der Formel (III), in Gegenwart eines alkalischen Katalysators mit Triphenylphosphit umgesetzt wird, wobei sich das gewünschte Produkt unter Abspaltung von Phenol bildet. Als Reaktionstemperatur seien 100°-180°C, als Katalysatoren seien NaOH, NaOCH₃, Na-phenolat, Na₂CO₃, KOH und Tributylamin genannt.

Die Reaktion kann in Substanz oder unter Zusatz von Lösungsmitteln erfolgen. Das Molverhältnis der Reaktanten oxetangruppenhaltiger Monoalkohol R-OH, Arylverbindung und Triphenylphosphit, ergibt sich aus dem herzustellenden Endprodukt der Formel (I).

Den Polymeren können die oxetangruppenhaltigen Phosphite gemäß Komponente B) sowohl einzeln als auch in Kombination miteinander in den genannten Konzentrationen zugesetzt werden.

Die Herstellung der stabilisierten Polymere kann erfolgen, indem das Phosphit entweder in reiner Form dem geschmolzenen Polymer oder gegebenenfalls in Lösung in einem niedrigsiedenden Lösungsmittel dem Polymer zudosiert wird. Auch durch Tränkung des gepulverten oder granulierten Polymers mit dem Phosphit (gegebenenfalls mit dessen Lösung in einem Lösungsmittel wie zum Beispiel Isopropanol) in einer geeigneten Mischapparatur lassen sich die stabilisierten Polymere herstellen. Auch durch Zugabe als Batch während des Herstellunp-/Compoundierprozesses (Herstellung des Batches durch Einarbeitung des Phosphits in das Polymer beispielsweise durch Extrusion), gegebenenfalls als Batch auf Basis Polyalkylenterephthalat oder gegebenenfalls als Batch auf Basis Polycarbonat lassen sich die erfindungsgemäßen Polymere herstellen. Das Batch kann granulatfömig oder pulverförmig sein. Die Aufarbeitung/Verarbeitung der erfindungsgemäßen Polymere erfolgt nach bekannten Techniken.

Entsprechendes gilt für die Zudosierung des Phosphits während der Herstellung des Polymers nach bekannten Verfahren in die Schmelze bzw. in einem Lösungsmittel.

Zusätzlich zu den Verbindungen der Formel (I) können Ester der phosphorigen Säure eingesetzt werden, welche pro Molekül mindestens eine phosphorgebundene Hydroxylgruppe (P-OH) sowie mindestens einen Rest eines zwei- oder mehrwertigen Phenols enthalten, wobei die Gesamtmenge an Phosphorigsäureestern der Formeln (I) und (IV) 0,041 bis 0,095 Gew.-Teile (bezogen auf 100 Gew.-Teile der Gesamtzusammensetzung) beträgt. Bevorzugt sind davon Phosphorigsäureester der Formel (IV) 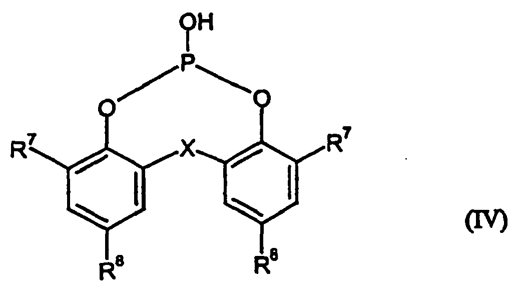 worin
- R⁷ und R⁸: gleich oder verschieden sind und für C₁-C₉-Alkyl, C₅-C₆-Cycloalkyl, C₇-C₉-Aralkyl oder C₆-C₁₀-Aryl stehen und
- X: für -S- oder R⁹-CH mit R⁹ für Wasserstoff, C₁-C₆-Alkyl oder C₅-C₆-Cycloalkyl steht.

Als Alkylreste kommen beispielsweise und bevorzugt in Frage: Methyl, Ethyl, Propyl, Isononyl, als Aralkylreste: 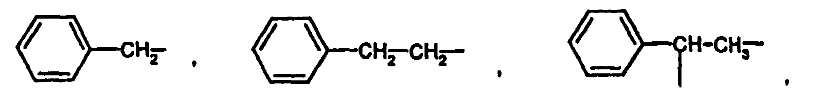 als Cycloalkylreste: Cylopentyl, Cyclohexyl,
als Arylreste: Phenyl, Naphthyl.

Bevorzugt werden Phosphorigsäureester der Formel (IV) eingesetzt, in denen R⁷ und R⁸ für einen Benzyl-, α-Methylbenzyl-, α,α-Dimethylbenzyl-, Methyl-, Ethyl-, Isopropyl-, tert.-Butyl-, tert.-Amyl-, Isononyl-, Cyclopentyl- oder Cyclohexyl-Rest stehen und X für 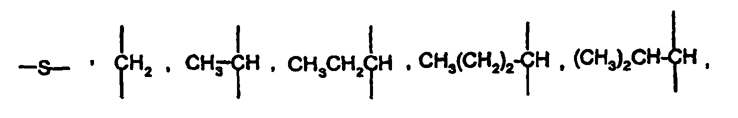 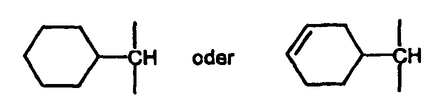 steht.

Besonders bevorzugt ist der Phosphorigsäureester der Formel (IV), worin X für Methylen, R⁷ für Cyclohexyl und R⁸ für Methyl stehen [4,8-Dicylohexyl-6-hydroxy-2,10-dimethyl-12H-dibenzo(dg)(1,3,2)-dioxaphosphocin]

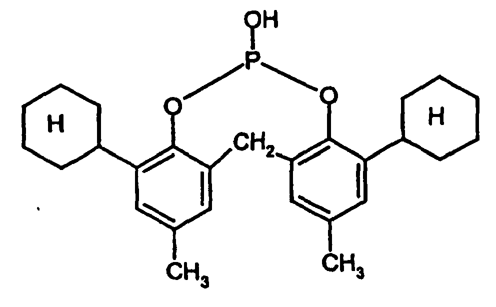

Die Phosphorigsäureester der Formel (IV) können in bekannter Weise hergestellt werden durch Umsetzung von Triphenylphosphit mit entsprechenden Dihydroxyverbindungen in Gegenwart von Wasser (vgL z.B. DE-A 29 29 229).

Es kann auch eine Mischung mehrerer Phosphorigsäureester eingesetzt werden.

Im Sinne der Erfindung sind insbesondere Phosphorigsäurester bevorzugt, welche pro Molekül mindestens eine Oxetangruppe sowie mindestens einen Rest eines zwei- oder mehrwertigen Phenols enthalten.

### Komponente C

Die Komponente C stellen Füll- und Verstärkungsstoffe dar.

Als faser- oder teilchenförmige Füllstoffe und Verstärkungsstoffe können z.B. Glasfasern, Glaskugeln, Glasgewebe, Glasmatten, Kohlenstofffasern, Aramidfasern, Kaliumtitanat-Fasern, Naturfasern, amorphe Kieselsäure, Magnesiumcarbonat, Bariumsulfat, Feldspat, Glimmer, Silikate, Quarz, Talkum, Kaolin, Titandioxid, Wollastonit, u.a. zugesetzt werden, die auch oberflächenbehandelt sein können. Bevorzugte Verstärkungsstoffe sind handelsübliche Glasfasern. Die Füllstoffe und Verstärkungsstoffe können mit einem geeigneten Schlichtesystem und einem Haftvermittler bzw. Haftvermittlersystem z.B. auf Silanbasis ausgerüstet sein können.

Bevorzugt werden Glasfasern eingesetzt.

### Komponente D

Als Flammschutzmittel können handelsübliche organische Halogenverbindungen mit Synergisten oder handelsübliche organische Stickstoffverbindungen oder organisch/anorganische Phosphorverbindungen einzeln oder im Gemisch eingesetzt werden.

Auch mineralische Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO98/17720 (PCT/EP/05705) geeignet. z.B. Triphenylphosphat (TPP), Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate geeignet. Kohlenstoffbildner und und Tettafluorethylenpolymerisate können zugesetzt werden.

### Komponente E

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-A 2 232 877, DE-A 2 703 376, DE-A 2 714 544, DE-A 3 000 610, DE-A 3 832 396; zur Herstellung aromatischer Polyestercarbonate z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (V) 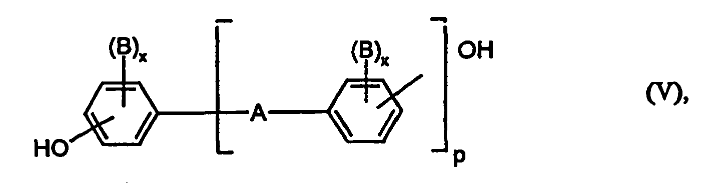 wobei
- A: eine Einfachbindung, C₁-C₅-Alkylen, C₂-C₅-Alkyliden, C₅-C₆-Cycloalkyliden, -O-, -SO-, -CO-, -S-, -SO₂-, C₆-C₁₂-Arylen, an das weitere aromatische gegebenenfalls Heteroatome enthaltende Ringe kondensiert sein können,
oder ein Rest der Formel (Va) oder (Vb) 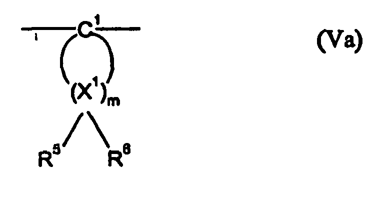 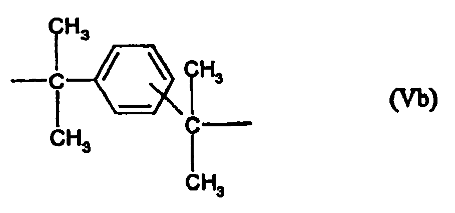
- B: jeweils C₁-C₁₂-Alkyl vorzugsweise Methyl, Halogen, vorzugsweise Chlor und/oder Brom 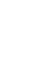
- x: jeweils unabhängig voneinander 0,1 oder 2,
- p: 1 oder 0 sind, und
- R⁵ und R⁶: für jedes X¹ individuell wählbar, unabhängig voneinander Wasserstoff oder C₁ C₆ Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE A 2 812 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10 000 bis 200 000, vorzugsweise 15 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielsweise US-A 3 419 634) bzw. nach literaturbekannten Verfahren herstellbar. Die Herstellung Polydiorganosiloxanhaltiger Copolycarbonate wird z. B. in DE-A 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht

Die Menge an Kettenabbrechern beträgt jeweils 0,1 bis 10 Mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

### Komponente F

Die Komponente F umfasst ein oder mehrere Pfropfpolymerisate von
- F.1: 5 bis 95, vorzugsweise 30 bis 90 Gew.-%, wenigstens eines Vinylmonomeren auf
- F.2: 95 bis 5, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage F.2 hat im allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere F.1 sind vorzugsweise Gemische aus
- F.1.1: 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
- F.1.2: 1 bis 50 Gew.-Teilen Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere F.1.1 sind ausgewählt aus mindestens einem der Monomere Styrol, α-Methylstyrol und Methylmethacrylat, bevorzugte Monomere F.1.2 sind ausgewählt aus mindestens einem der Monomere Acrylnitril, Maleinsäureanhydrid und Methylmethacrylat.

Besonders bevorzugte Monomere sind F.1.1 Styrol und F.1.2 Acrylnitril.

Für die Pfropfpolymerisate F geeignete Pfropfgrundlagen F.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen F.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß F.1.1 und F.1.2), mit der Maßgabe, dass die Glasübergangstemperatur der Komponente F.2 unterhalb <10°C, vorzugsweise <0°C, besonders bevorzugt <-10°C liegt.

Besonders bevorzugt ist reiner Polybutadienkautschuk.

Besonders bevorzugte Polymerisate F sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280 ff. beschrieben sind. Der Gelanteil der Pfropfgrundlage F.2 beträgt mindestens 30 Gew.-%, vorzugsweise mindestens 40 Gew.-% (in Toluol gemessen).

Die Pfropfcopolymerisate F werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropikautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropänonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke gemäß F.2 der Polymerisate F sind vorzugsweise Polymerisate aus Acrylsäurealkylestern, gegebenenfalls mit bis zu 40 Gew.-%, bezogen auf F.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage F.2.

Bei cyclischen vernetzenden Monomeren mit mindestens 3 ethylenisch ungesättigten Gruppen ist es vorteilhaft, die Menge auf unter 1 Gew.-% der Pfropfgrundlage F.2 zu beschränken.

Bevorzugte "andere" polymerisierbare, ethylenisch ungesättigte Monomere, die neben den Acrylsäureestern gegebenenfalls zur Herstellung der Pfropfgrundlage F.2 dienen können, sind z. B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage F.2 sind Emulsionspolymerisate, die einen Gelgehalt von mindestens 60 Gew.-% aufweisen.

Weitere geeignete Pfropgrundlagen gemäß F.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage F.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-1796) bestimmt werden.

### Komponente G

Die Komponente G stellen Additive dar. Übliche Additive sind z.B. Stabilisatoren (zum Beispiel UV-Stabilisatoren, Thermostabilisatoren, Gammastrahlenstabilisatoren), Antistatika, Fließhilfsmittel, Entformungsmittel, Brandschutzadditive, Emulgatoren, Nukleirungsmittel, Weichmacher, Gleitmittel, Farbstoffe und Pigmente. Die genannten und weitere geeignete Additive sind zum Beispiel beschrieben in Gächter, Müller, Kunststoff-Additive, 3. Ausgabe, Hanser-Verlag, München, Wien, 1989. Die Additive können alleine oder in Mischung bzw. in Form von Masterbatchen eingesetzt werden.

Als Stabilisatoren können zum Beispile sterisch gehinderte Phenole, Hydrochinone, aromatische sekundäre Amine wie Diphenylamine, substituierte Resorcine, Salicylate, Benzotriazole und Benzophenone, sowie verschieden substituierte Vertreter dieser Gruppen und deren Mischungen eingesetzt werden.

Als Pigmente können z.B. Titandioxid, Ultramarinblau, Eisenoxid, Ruß, Phthalocyanine, Chinacridone, Perylene, Nigrosin und Anthrachinone eingesetzt werden.

Als Nukleierungsmittel können z.B. Natriumphenylphosphinat, Aluminiumoxid, Siliziumdioxid sowie bevorzugt Talkum eingesetzt werden.

Als Gleit- und Entformungsmittel können Esterwachse, Penteritrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse (Mischungen aus geradkettigen, gesättigten Carbonsäuren mit Kettenlängen von 28 bis 32 C-Atomen) sowie niedermolekulare Polyethylen- bzw. Polypropylenwachse eingesetzt werden.

Als Weichmacher können zum Beispiel Phthalsäuredioctylester, Phthalsäuredibenzylester, Phthalsäurebutylbenzylester, Kohlenwasserstofföle, N-(n-Butyl)benzolsulfonamid eingesetzt werden.

Die Herstellung der erfindungsgemäßen Zusammensetzungen erfolgt nach an sich bekannten Verfahren durch Mischen der Komponenten. Das Mischen der Komponenten erfolgt durch Vermischen der Komponenten in den entsprechenden Gewichtsanteilen. Vorzugsweise geschieht das Mischen der Komponenten bei Raumtemperatur (bevorzugt 0 bis 40°C) und/oder bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Gegenstand der Erfindung sind ferner Verfahren zur Herstellung der Zusammensetzungen, deren Verwendung und zur Herstellung von Formkörpern sowie die Formkörper selbst.

### Beispiels:

**Phosphorigsäureester:** Bei dem Phosphorigsäureester in Tabelle 1 handelt es sich um Phosphorigsäure-(1-methethyliden)di-4,1-phenylen-tetrakis(3-ethyl-(3-oxetanyl)-methyl)ester CA:53184-75-1)

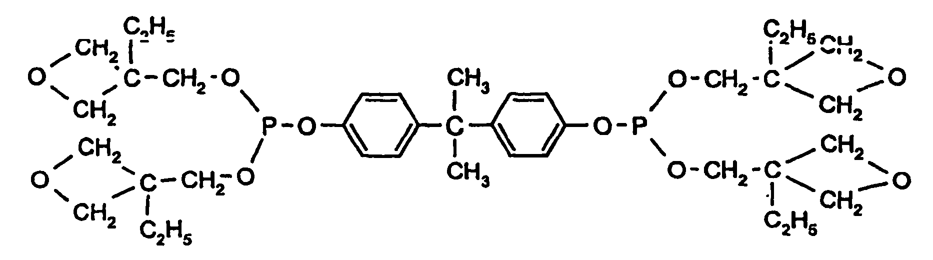

Der Phosphorigsäureester in Tabelle 1 wird als Masterbatch (10%ig) in Polybutylenterephthalat (PBT) der Bayer AG, Leverkusen, Deutschland, mit einer intrinsischen Viskosität IV = 0,95 cm³/g eingesetzt. In Tabelle 1 ist der tatsächliche Gehalt an Phosphorigsäureester bezogen auf die Gesamtzusammensetzung angegeben.

PBT: Bei dem eingesetzten PBT handelt es sich mit Ausnahme der geringen PBT-Anteile des 10%igen Phosphorigsäurester-Masterbatches (10%ig) um hochviskoses PBT der Bayer AG mit einer intrinsischen Viskosität IV = 1,42 cm³/g (Pocan B 1800). In Tabelle 1 ist die Gesamtmenge an PBT angegeben.

Das Phosphorigsäurester-Masterbatch und das hochviskose PBT werden in den in Tabelle 1 angegebenen Mengenverhältnissen physikalisch vermischt und diese Mischung (Dryblend) auf einer Spritzgießmachine des Typs Arburg 320-210-500 bei einer Massetemperatur von ca. 260°C und einer Werkzeugtemperatur von ca. 80°C zu Schulterstäben (3 mm Dicke gemäß ISO 527) verspritzt. Alle in Tabelle 1 aufgeführten Untersuchungen werden an o.g. Schulterstäben durchgeführt.

Die Bestimmung der intrinsischen Viskosität IV erfolgt an einer Lösung von 5g PBT gelöst in 1 Liter Phenol / ortho-Dichlorbenzol (50 Gew.-% / 50 Gew.-%) bei 25°C.

Die Bestimmung der COOH-Endgruppen erfolgt durch Auflösen von Probenmaterial in Kresol / Chloroform und anschließender photometrische Titration.

Die Reißdehnung wird an e.g. Schulterstab im Zugversuch DIN 53455 gemessen.

Die Hydrolyseversuche erfolgen durch Lagerung der o.g. Prüfkörper in einem Varioklav Dampfsterilisator (Typ 300/400/500 EP-Z) bei 100°C in einer gesättigten Wasserdampfatmosphäre.

Wie aus Tabelle 1 ersichtlich zeigen die erfindungsgemäßen Formmassen (Bsp.1 und Bsp. 2) nach Wasserdampflagerung für 240 Stunden niedrigere COOH-Endgruppengehalte als die Vergleichsbeispiele 1 bis 5. Die erfindungsgemäßen Formmassen (Bsp.1 und Bsp. 2) zeigen nach Wasserdampflagerung für 240 Stunden höhere Reißdehnungswerte im Zugversuch als die Vergleichsbeispiele 1 bis 5. Niedrigere COOH-Endgruppengehalte und höhere Reißdehnungswerte nach Wasserdampflagerung weisen auf geringere Polymerschädigung durch Polymerabbau hin und zeigen die verbesserte Hydrolysebeständigkeit.

**Tabelle 1**

| | | Vergl. 1 | Vergl. 2 | Vergl. 3 | Bsp. 1 | Bp.2 | Vergl. 4 | Vergl. 5 |
|---|---|---|---|---|---|---|---|---|
| PBT | % | 100 | 99,98 | 99,96 | 99,95 | 99,94 | 99,9 | 99,85 |
| Phosphorigsäureester | | 0 | 0,02 | 0,04 | 0,06 | 0,07 | 0,1 | 0,15 |
| COOH-Endgruppen Spritzfrisch, vor Hydrolyse | mmol/kg | 33 | 28 | 22 | 22 | 20 | 21 | 21 |
| COOH-Endgruppen nach 240 Stunden Hydrolyse | mmol/kg | 96 | 77 | 71 | 65 | 60 | 69 | 82 |
| Reißdehnung Spritzfrisch, vor Hydrolyse | % | 247 | 238 | 233 | 248 | 253 | 282 | 277 |
| Reißdehnung nach 240 Stunden Hydrolyse | % | 2 | 5 | 8 | 13 | 17 | 11 | 1 |

## Patentansprüche

1. Zusammensetzung enthaltend
A) Polyalkylenterephthalat,
B) 0,041 bis 0,095 Gew.-Teile (bezogen auf 100 Gew.-Teile der Gesamtzusammensetzung) Phosphorigsäureester der Formel (I) 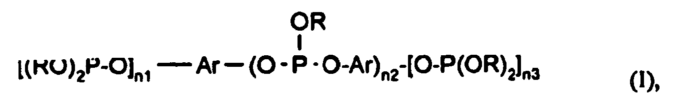 in welcher
n₁ 1 der eine beliebige ganze Zahl >1, vorzugsweise 1 bis 9,
n₂ 0 oder eine beliebige ganze Zahl >0, vorzugsweise 0 bis 2,
n₃ 1 oder eine beliebige ganze Zahl >1, vorzugsweise 1 bis 9 bedeutet,
R Alkyl, Aralkyl, Cycloalkyl, Aryl oder Hetaryl bedeutet, wobei mindestens einer der Reste R den Rest eines mindestens eine Oxetangruppe Y enthaltenden Monoalkohols darstellt, und
Ar für Aryl steht, welches gegebenenfalls durch Alkyl und/oder Hydroxy substituiert sein kann, und wobei für n₂ ≠ 0 Ar gleich oder verschieden sein kann,
und gegebenenfalls mindestens eine weitere Komponente ausgewählt aus
C) Füll- und Verstärkungsstoffen,
D) Flammschutzadditiven,
E) aromatisches Polycarbonat
F) Elastomermodifikatoren, und
G) weiteren üblichen Additiven.

2. Zusammensetzung gemäß Anspruch 1 enthaltend 0,051 - 0,075 Gew.-Teile B) bezogen auf 100 Gew.-Teile der Gesamtzusammensetzung.

3. Zusammensetzung gemäß Anspruch 1 enthaltend 0,055 - 0,065 Gew.-Teile B) bezogen auf 100 Gew.-Tei le der Gesamtzusammensetzung.

4. Zusammensetzung gemäß einem oder mehreren der vorangegangenen Ansprüche enthaltend 6 - 69 Gew.-Teile C) bezogen auf 100 Gew.-Teile der Gesamtzusammensetzung.

5. Zusammensetzung gemäß einem oder mehreren der vorangegangenen Ansprüche enthaltend 5 - 25 Gew.-Teile D) bezogen auf 100 Gew.-Teile der Gesamtzusammensetzung.

6. Zusammensetzung gemäß einem oder mehreren der vorangegangenen Ansprüche enthaltend 6 - 69 Gew.-Teile E) bezogen auf 100 Gew.-Teile der Gesamtzusammensetzung.

7. Zusammensetzung gemäß einem oder mehreren der vorangegangenen Ansprüche enthaltend 5 - 29 Gew.-Teile F) bezogen auf 100 Gew.-Teile der Gesamtzusammensetzung.

8. Zusammensetzung gemäß einem oder mehreren der vorangegangenen Ansprüche enthaltend 0,01 - 5 Gew.-Teile G) bezogen auf 100 Gew.-Teile der Gesamtzusammensetzung.

9. Zusammensetzung gemäß Anspruch 1, worin Y in Formel (I) der heterozyklische Rest 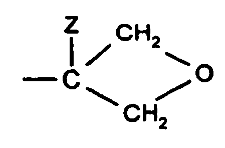 ist, worin Z H, CH₃, C₂H₅, n-C₅H₁₁, -CH₂-C₅H₁₁-CH₂-O-C₆H₁₃, oder CH₂-O-C₂H₅ sein kann.

10. Zusammensetzung gemäß Anspruch 1 oder 9, wobei in Formel (I) Ar einem Rest der Formel (II) entspricht 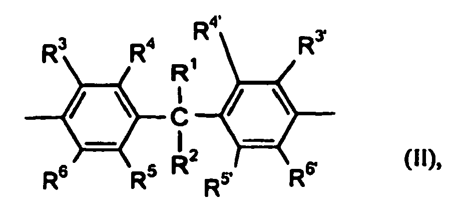 worin
R¹ und R² gleich oder verschieden sind und H, C₁-C₁₈-Alkyl, ein- oder mehrkerniges C₃-C₆-Cycloalkyl oder ein- oder mehrkerniges C₆-C₁₈-Aryl bedeuten,
R³, R^{3'}, ⁴, R^{4'}, R⁵, R^{5'}, R⁶ und R^{6'} Rgleich oder verschieden sind und H, C₁-C₁₈-Alkyl, ein- oder mehrkerniges C₃-C₆-Cycloalkyl, ein- oder mehrkerniges C ₆-C₁₈-Aryl, C₁-C₁₈-Alkoxy, C₁-C₁₈-Aryloxy oder Halogen bedeuten.

11. Zusammensetzung gemäß Anspruch 1 bis 8 enthaltend als Komponente B) einen Phosphorigsäureester der Formel (IV) 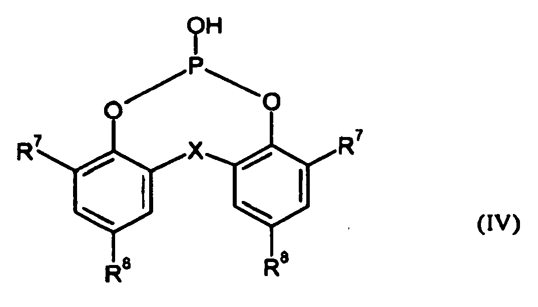 worin
R⁷ und R⁸ gleich oder verschieden sind und für C₁-C₉-Alkyl, C₅-C₆-Cycloalkyl, C₇-C₉-Aralkyl oder C₆-C₁₀-Aryl stehen und
X für -S- oder R⁹-CH mit R⁹ für Wasserstoff, C₁-C₆-Alkyl oder C₅-C₆-Cycloalkyl steht, wobei die Gesamtmenge an Phosphorigsäureestern der Formeln (I) und (IV) 0,041 bis 0,095 Gew.-Teile (bezogen auf 100 Gew.-Teile der Gesamtzusammensetzung) beträgt.

12. Zusammensetzung gemäß Anspruch 1 bis 11, worin Komponente F ein oder mehrere Pfropfpolymerisate umfasst von
F.1 5 - 95 Gew.-Teilen (bezogen auf 100 Gew.-Teile F) wenigstens eines Vinylmonomeren auf
F.2 95 - 5 Gew.-Teilen (bezogen auf 100 Gew.-Teile F) einer oder mehrerer Pfropfgrundlagen mit Glasübergangstemperaturen < 10°C.

13. Verwendung der Zusammensetzungen gemäß Anspruch 1 bis 12 zur Herstellung von Formteilen.

14. Formteile, erhältlich aus Zusammensetzungen gemäß Anspruch 1 bis 12.

## Claims

1. Composition comprising
A) polyalkylene terephthalate,
B) 0.041 to 0.095 parts by weight (based on 100 parts by weight of the total composition) of phosphorous esters of the formula (I) 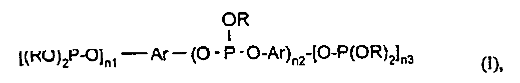 in which
n₁ is 1 or any integer >1, preferably 1 to 9,
n₂ is 0 or any integer >0, preferably 0 to 2,
n₃ is 1 or any integer >1, preferably 1 to 9,
R is alkyl, aralkyl, cycloalkyl, aryl or hetaryl, at least one of the radicals R being the radical of a monoalcohol containing at least one oxetane group Y, and
Ar is aryl, which optionally may be substituted by alkyl and/or hydroxyl, and where for n₂ ≠ 0 Ar can be alike or different,
and optionally at least one further component selected from
C) fillers and reinforcing agents,
D) flame retardancy additives,
E) aromatic polycarbonate,
F) elastomer modifiers, and
G) further, typical additives.

2. Composition according to Claim 1, containing 0.051 - 0.075 part by weight of B) based on 100 parts by weight of the total composition.

3. Composition according to Claim 1, containing 0.055 - 0.065 part by weight of B) based on 100 parts by weight of the total composition.

4. Composition according to one or more of the preceding claims, containing 6 - 69 parts by weight of C) based on 100 parts by weight of the total composition.

5. Composition according to one or more of the preceding claims, containing 5 - 25 parts by weight of D) based on 100 parts by weight of the total composition.

6. Composition according to one or more of the preceding claims, containing 6 - 69 parts by weight of E) based on 100 parts by weight of the total composition.

7. Composition according to one or more of the preceding claims, containing 5 - 29 parts by weight of F) based on 100 parts by weight of the total composition.

8. Composition according to one or more of the preceding claims, containing 0.01 - 5 parts by weight of G) based on 100 parts by weight of the total composition.

9. Composition according to Claim 1, in which Y in formula (I) is the heterocyclic radical 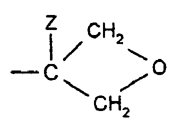 in which Z can be H, CH₃, C₂H₅, n-C₅H₁₁, -CH₂-C₅H₁₁, -CH₂-O-C₆H₁₃ or CH₂-O-C₂H₅.

10. Composition according to Claim 1 or 9, where in formula (I) Ar is a radical of the formula (II) 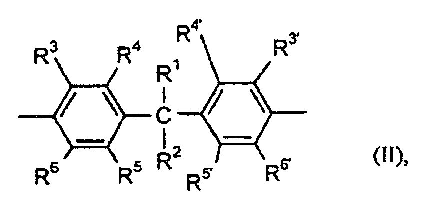 in which
R¹ and R² are alike or different and are H, C₁-C₁₈ alkyl, mono- or polycyclic C₃-C₆ cycloalkyl or mono- or polycyclic C₆-C₁₈ aryl,
R³, R^{3'}, R⁴, R^{4'}, R⁵, R^{5'}, R⁶ and R^{6'} are alike or different and are H, C₁-C₁₈ alkyl, mono- or polycyclic C₃-C₆ cycloalkyl, mono- or polycyclic C₆-C₁₈ aryl, C₁-C₁₈ alkoxy, C₁-C₁₈ aryloxy or halogen.

11. Composition according to Claim 1 to 8, comprising as component B) a phosphorous ester of the formula (IV) 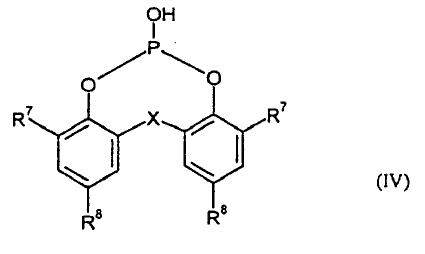 in which
R⁷ and R⁸ are alike or different and are C₁-C₉ alkyl, C₅-C₆ cycloalkyl, C₇-C₉ aralkyl or C₆-C₁₀ aryl and
X is -S- or R⁹-CH where R⁹ is hydrogen, C₁-C₆ alkyl or C₅-C₆ cycloalkyl, the total amount of phosphoric esters of the formulae (I) and (IV) being 0.041 to 0.095 part by weight (based on 100 parts by weight of the total composition).

12. Composition according to Claim 1 to 11, in which component F comprises one or more graft polymers of
F.1 5-95 part by weight (based on 100 parts by weight of F) of at least one vinyl monomer on
F.2 95-5 parts by weight (based on 100 parts by weight of F) of one or more graft bases having glass transition temperatures <10°C.

13. Use of the compositions according to Claim 1 to 12 for producing mouldings.

14. Mouldings obtainable from compositions according to Claim 1 to 12.

## Revendications

1. Composition contenant
A) un poly(téréphtalate d'alkylène),
B) de 0,041 à 0,095 parties en poids (pour 100 parties en poids de la composition totale) d'esters de l'acide phosphoreux de formule (I) : 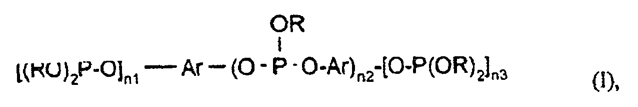 dans laquelle
n₁ vaut 1 ou est un nombre entier quelconque > 1, de préférence de 1 à 9,
n₂ vaut 0 ou est un nombre entier quelconque > 0, de préférence de 0 à 2,
n₃ vaut 1 ou est un nombre entier quelconque > 1, de préférence de 1 à 9,
R est un radical alkyle, aralkyle, cycloalkyle, aryle ou hétaryle, au moins l'un des radicaux R représentant le résidu d'un monoalcool contenant un groupe oxétanne Y, et
Ar représente un radical aryle, qui peut éventuellement être substitué par des radicaux alkyle et/ou hydroxy, et les radicaux Ar peuvent être identiques ou différents quand n₂ ≠ 0,
et éventuellement au moins un autre composant choisi parmi
C) les matières de charge et les renforts,
D) les additifs ignifugeants,
E) un polycarbonate aromatique,
F) les modifiants élastomères, et
G) d'autres additifs usuels.

2. Composition selon la revendication 1, contenant 0,051 à 0,075 parties en poids de B), pour 100 parties en poids de la composition totale.

3. Composition selon la revendication 1, contenant 0,055 à 0,065 parties en poids de B) pour 100 parties en poids de la composition totale.

4. Composition selon l'une ou plusieurs des revendications précédentes, contenant 6 à 69 parties en poids de C) pour 100 parties en poids de la composition totale.

5. Composition selon l'une ou plusieurs des revendications précédentes, contenant 5 à 25 parties en poids de D) pour 100 parties en poids de la composition totale.

6. Composition selon l'une ou plusieurs des revendications précédentes, contenant 6 à 69 parties en poids de E) pour 100 parties en poids de la composition totale.

7. Composition selon l'une ou plusieurs des revendications précédentes, contenant 5 à 29 parties en poids de F) pour 100 parties en poids de la composition totale.

8. Composition selon l'une ou plusieurs des revendications précédentes, contenant 0,01 à 5 parties en poids de G) pour 100 parties en poids de la composition totale.

9. Composition selon la revendication 1, dans laquelle Y (dans la formule I), est le radical hétérocyclique : 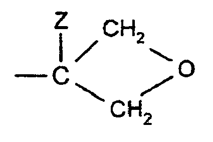 dans lequel Z peut être H, CH₃, C₂H₅, n-C₅H₁₁, -CH₂-C₅H₁₁, -CH₂-O-C₆H₁₃ ou CH₂-O-C₂H₅.

10. Composition selon la revendication 1 ou 9, dans laquelle, dans la formule (I), Ar correspond à un radical de formule (II) : 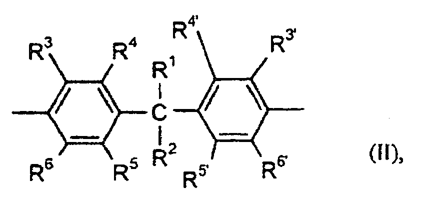 dans laquelle R¹ et R² sont identiques ou différents et représentent chacun H, un radical alkyle en C₁-C₁₈, cycloalkyle mono- ou polycyclique en C₃-C₆ ou aryle mono- ou polycyclique en C₆-C₁₈,
R³, R^{3'}, R⁴, R^{4'}, R⁵, R^{5'}, R⁶ et R^{6'} sont identiques ou différents et représentent chacun H, un radical alkyle en C₁-C₁₈, cycloalkyle mono- ou polycyclique en C₃-C₆, aryle mono- ou polycyclique en C₆-C₁₈, alcoxy en C₁-C₁₈, aryloxy en C₁-C₁₈, ou halogéno.

11. Composition selon les revendications 1 à 8, contenant en tant que composant B) un ester de l'acide phosphoreux de formule (IV) : 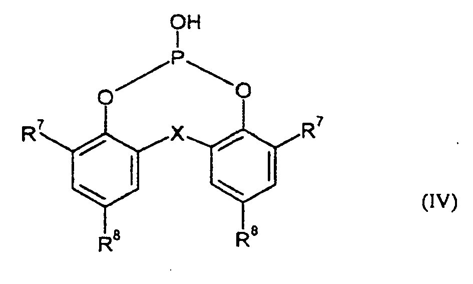 dans laquelle
R⁷ et R⁸ sont identiques ou différents et représentent chacun un radical alkyle en C₁-C₉, cycloalkyle en C₅-C₆, aralkyle en C₇-C₉ ou aryle en C₆-C₁₀, et
X est -S- ou R⁹-CH, R⁹ étant un atome d'hydrogène ou un radical alkyle en C₁-C₆ ou cycloalkyle en C₅-C₆,
la quantité totale des esters de l'acide phosphoreux de formules (I) ou (IV) étant de 0,041 à 0,095 parties en poids (pour 100 parties en poids de la composition totale).

12. Composition selon les revendications 1 à 11, dans laquelle le composant F comprend un ou plusieurs polymères greffés constitués
F.1 de 5 à 95 parties en poids (pour 100 parties en poids de F) d'au moins un monomère vinylique, sur
F.2 95 à 5 parties en poids (pour 100 parties en poids de F) d'une ou plusieurs bases de greffage ayant une température de transition vitreuse inférieure à 10°C.

13. Utilisation des compositions selon les revendications 1 à 12 pour fabriquer des objets moulés.

14. Objets moulés pouvant être obtenus à partir de compositions selon les revendications 1 à 12.
